# EUROPEAN PATENT SPECIFICATION

(11) **EP 3 788 019 B1**
(45) Date of publication and mention of the grant of the patent: **20.04.2022**
(21) Application number: 19742981.4
(22) Date of filing: 29.04.2019
(51) Int. Cl.: C04B 7/24, C04B 18/16, F27B 15/00, F28C 3/14

(54) **CEMENT WASTE RECYCLING DEVICE**
VORRICHTUNG ZUM RECYCLING VON ZEMENTABFÄLLEN
DISPOSITIF DE RECYCLAGE DE DÉCHETS DE CIMENT

(30) Priority: 30.04.2018 NL 2020846
(43) Date of publication of application: 10.03.2021
(73) Proprietor: C2CA Technology B.V., 3542 DA Utrecht (NL)
(72) Inventor: REM, Peter, 3542 DA Utrecht (NL); BERKOUT, Peter, 3542 DA Utrecht (NL); HEIJBOER, Jaap, 3542 DA Utrecht (NL); FASE, Harry, 3542 DA Utrecht (NL)
(74) Representative: Van Breda, Jacobus
(86) International application number: PCT/NL2019/050248
(87) International publication number: WO 2019/212336

(56) References cited:
- EP-A1- 0 154 733
- WO-A2-99/31450
- US-A- 5 656 243
- HIROKAZU SHIMA ET AL: "An Advanced Concrete Recycling Technology and its Applicability Assessment through Input-Output Analysis", JOURNAL OF ADVANCED CONCRETE TECHNOLOGY, vol. 3, no. 1, February 2005 (2005-02), pages 53-67, XP055539422, JP ISSN: 1346-8014, DOI: 10.3151/jact.3.53 cited in the application

## Description

### FIELD OF THE INVENTION

The present invention relates to a cement waste recycling device.

### BACKGROUND OF THE INVENTION

Cement's major constituents are calciumsilicates. After its use as a binder in concrete, by addition of water and gravel and/or sand, it is present in a hydrated form in a concentration of approximately 20% (w/w). If the hydrated calciumsilicates in waste concrete can be liberated from the gravel and/or sand, it can be heated again to produce new cement. The hydrated calciumsilicates can be liberated by heating the waste concrete to a temperature over 900°C at which point it falls apart into gravel and/or sand and calciumsilicates. As the gravel and/or sand and the calciumsilicates are initially attached to one another, the gravel and/or sand act as a parasitic heat capacity.

German patent application DE 10 2006 049 836 A1 discloses a process for the production of a hydraulic binder from calcium silicates containing building rubble, wherein the building rubble is first reduced to particles with a size smaller than 10 mm, optionally enriching the binder phase of the building rubble by sieving or sorting, and subsequently heating the rubble at a temperature of 600°C to 800°C during 0.25 to 10 hours.

Obviously, such heating for extended periods requires a lot of energy, resulting in an industrially irrelevant process.

Alternatively, a two-step process can be applied wherein concrete waste is first heated to a lower temperature whereby the bonds between the gravel and/or sand and the calciumsilicates weaken. Thereafter, the heated concrete waste is milled and the bonds are broken.

A cement waste recycling device that makes use of such a two-step process is known from "H. Shima et al, An Advanced Concrete Recycling Technology and its Applicability Assessment through Input-Output Analysis, Journal of Advanced Concrete Technology, 2005". Concrete rubble is crushed to a size under 50 mm and heated to 300°C in a vertical kerosene fueled furnace. The heated concrete is thereafter sent to rubbing equipment.

In this batch-type process the cement waste is heated while it is stationary. This implies that heat is not distributed evenly throughout the cement waste resulting in temperature gradients and waste of energy.

WO 99/31450 A2 discloses a heat exchanger having a hollow stack with a feed inlet at the top and a gas inlet at the bottom, wherein the stack contains a plurality of baffles between the feed and gas inlets in order to retard the falling feed and increase the exposure to the gases.

The objective of the present invention is to provide a cement recycling device which has a lower energy requirement as compared to the prior art devices and methods. Within the scope of this invention and for the avoidance of doubt it is remarked that cement waste includes concrete fines.

### SUMMARY OF THE INVENTION

In accordance with the present disclosure, there is provided a method of recycling cement waste, comprising contacting cement waste and heated gas with each other and obtaining heated cement waste having a temperature between 400°C and 600°C, wherein the cement waste and the heated gas move in opposite directions to each other. This counter-current movement of cement waste and heated gas is advantageous because it promotes that the cement waste and the heated gas thoroughly mix with each other. This leads to an efficient transfer of heat from the heated gas to the cement waste, as the contact surfaces of both phases are as large as possible. Moreover, the countercurrent movement ensures that a temperature difference between both phases is as large as possible at every point in the device, resulting in a most optimal transfer of heat.

In accordance with the present invention, there is provided a cement waste recycling device which is particularly suited for carrying out such a method, comprising a heater with an inlet for cement waste and an outlet for processed cement waste, the heater being configured for transporting cement waste in a cement waste transportation direction from the inlet to the outlet while transporting heated gas in counter-current with the cement waste transportation direction, wherein at least one screen is located between the inlet and the outlet of the heater and wherein at least part of the screen is vibratable. The screen between the inlet and the outlet of the heater acts to distribute the cement waste more evenly throughout the heater, thereby improving heat transfer from the heated gas phase to the cement waste phase. In addition, the screen acts as a barrier for the cement waste phase and slows down the transportation of the cement waste, resulting in a longer residence time of the cement waste in the heater and thus a better transfer of heat from the heated gas to the cement waste. The screen may be constructed from a sturdy material, such as steel or other metals or metal alloys.

At least part of the screen is vibratable. This prevents the screen from getting clogged and ensures no cement waste remains on top of the elongate bars that could be heated far above the desired temperature as the residence time of that particular cement waste would be much longer as other cement waste, resulting in unnecessary waste of energy.

### DETAILED DESCRIPTION OF THE INVENTION

In a preferred embodiment the screen may comprise a plurality of layers having multiple elongate bars, wherein the elongate bars within each layer are spaced apart and arranged approximately parallel to each other. An even distribution of parallel elongate bars ensures an even distribution of cement waste throughout the heater. By having gaps with equal distance between the bars, the velocity at which the cement waste passes through these gaps is more constant, resulting in a more evenly mixture of heated gas and cement waste.

In a preferred embodiment each of the plurality of layers may be arranged approximately perpendicular to the cement waste transportation direction. Such an arrangement improves the homogenous distribution of cement waste throughout the heater. A direction of each of the plurality of layers other than a direction perpendicular to the cement waste transportation direction would lead to a more uneven distribution of cement waste throughout the heater and the residence time of the cement waste would possess a larger variability.

In a preferred embodiment a first layer of the plurality of layers may be stacked in a staggered position on top of a second layer of the plurality of layers, wherein the elongate bars within the first layer are approximately parallel to the elongate bars within the second layer. A staggered configuration of layers of the screen increases the average distance a cement waste particle has to travel across the screen. Therefore, the average residence time is increased. The layers may be staggered such that the distances between a first bar in a first layer and two other bars in a second layer on top of said first layer are equal. In other words, the offset of a first layer in relation to a second layer on top of said first layer equals half the distance between the elongate bars within a layer.

In a preferred embodiment the elongate bars may be spaced apart at a regular first distance from each other within at least one layer of the plurality of layers. This ensures that a flux of cement waste through the heater from the inlet to the outlet is more constant in a cross-sectional plane perpendicular to the cement waste transportation direction, which leads to a more homogenous distribution of cement waste throughout the heater and thus a better transfer of heat from the heated gas to the cement waste.

In a preferred embodiment a width of each spacing between the elongate bars within at least one layer of the plurality of layers may be 5-15 mm, preferably 8-12 mm, most preferably approximately 10 mm. The spacing between elongate bars in a layer of the screen is chosen dependent on the cement waste particle size distribution. When feeding the cement waste recycling device with cement waste having a size between 0-4 mm, an optimal width of the spacing between elongate bars is found to be approximately 10 mm. This spacing width represents a good trade-off between on the one hand slowing down the cement waste, thereby increasing the average residence time for efficient heat transfer, and on the other hand preventing the screen from getting clogged by larger cement waste particles. Cement waste may be milled until a size of the cement waste particles reaches 0-4 mm. The cement waste material can be passed over a coarse protection screen, such as a 10 mm grizzly before being fed to the cement waste recycling device, to avoid accidental large particles blocking the internal space of the cement waste recycling device.

In a preferred embodiment each layer may be spaced apart at a regular distance from each other. This provides gaps between elongate bars within the screen that are very similar. Transporting cement waste across such a screen results in a more constant velocity and a homogenous distribution of the cement waste across the screen and therefore a more constant and predictable transfer of heat from the heated gas to the cement waste.

In a preferred embodiment the elongate bars may have an at least partly circular cross-section, such as an arc-like cross-section. An arc-like cross-section of an elongate bar is on the one hand efficient in deflecting cement waste towards either side of the elongate bar and on the other hand efficient in slowing down the cement waste. Another advantage is that an arc-like cross-section makes more efficient use of materials that constitute the elongate bars as compared to, for example, elongate bars having a circular or square cross-section. In other words they are cheaper.

In a preferred embodiment the elongate bars may have a radius of curvature of 10-20 mm, preferably 12.5 to 17.5 mm, and most preferably a radius of curvature of 15 mm. This enables the elongate bars to have sufficient width to slow down the cement waste stream, while having a curvature that allows the cement waste to easily slide of to either side of the elongate bars, preventing the screen from becoming clogged with cement waste.

In a preferred embodiment at least part of the screen is vibratable at a frequency between 20-30 Hz, preferably at about 25 Hz. This frequency ensures a good throughput of cement waste through the heater.

In a preferred embodiment at least part of the screen is vibratable in a vibration direction perpendicular to the cement waste transportation direction. Such a vibration direction is preferred, as it prevents the screen from getting clogged, while minimizing wear on the elongate bars by impinging cement waste.

In a preferred embodiment the vibration direction may be parallel to a longitudinal axis of the elongate bars. This vibration direction prevents cement waste particles from flying around inside the screen and thus minimizing wearing down the elongate bars. In addition, a steady flow of cement waste through the screen is realized.

In a preferred embodiment the cement waste recycling device may comprise a dampening device, preferably a bellow. This bellow acts as a vibration absorber and can be connected between the screen and the remainder of the cement waste recycling device to efficiently absorb the vibrations of the vibrating screen and prevent unwanted transmission of these vibrations to other stationary parts of the cement waste recycling device.

In a preferred embodiment the length of the screen in the cement transportation direction is approximately 1-2 m, preferably 1.25-1.75 m, most preferably about 1.5 m. This length allows a residence time of the cement waste in the heater of over 30 seconds, which is sufficient to heat the cement waste up to 520°C. The residence time can be adjusted by changing the size of the elongate bars in the screen, changing the distance between these elongate bars, changing the vibration direction and/or vibration frequency of the screen, changing a temperature of the heated gas introduced by the heater, changing the length and/or width of the screen, changing the number of layers inside the screen, and other variables.

In a preferred embodiment the cement waste recycling device comprises a first heater and a second heater, each having an inlet and an outlet, wherein the outlet of the first heater is connected to the inlet of the second heater. Such an arrangement is particularly advantageous, as it allows heating of the cement in the first heater, up to a temperature of approximately 520°C to fracture the bonds between the sand/gravel and calcium silicates. Thereafter, in the second heater, the cement waste is cooled to a temperature below 250°C and the recovered heat is directly fed into the first heater. By stacking both heaters above one another, a constant flow of cement waste and heated gas throughout the cement waste recycling device is ensured.

In a preferred embodiment the cement waste recycling device comprises a heated gas recycling conduit at one end connected near the outlet of a heater to the device and at another end thereof connected near the inlet of a heater to the device. The heated gas temperature near the inlet of the heater, or near the inlet of the first heater, if the cement waste recycling device comprises two heaters, is approximately 120°C if the heated gas temperature near the outlet of the heater is approximately 600°C with a countercurrent heated gas flow of approximately 1.3 kg/s for every kg/s throughput of cement waste. The exiting heated gas flow having a temperature of approximately 120°C represents a significant amount of energy and as such, is a valuable source to recycle via a recycling conduit. Moreover, if the cement recycling device comprises two heaters, as mentioned above, heat exiting the inlet of the first heater can be guided to the outlet of the second heater, wherein the outlet of the first heater is connected to the inlet of the second heater. As such, cooled cement waste having a temperature below 250°C exits the outlet of the second heater, via for example a rotary sluice. The calcium silicates contained within this cooled cement waste can thereafter be liberated from the cement waste by a suitable mechanical process, such as milling.

In a preferred embodiment the heated gas recycling conduit comprises a separator, preferably a cyclone. The exiting heated gas flow having a temperature of approximately 120°C contains moisture, as well as a very fine fraction (250 micron) of the fine material in the cement waste. The flow of this very fine fraction represents about 10% of the total flow of fine material in the cement waste. As such, it is useful to remove this material from the exiting heated gas flow when this gas flow is recycled, to avoid accumulation of this material inside the cement waste recycling device. A cyclone can be used to remove this material from the exiting heated gas flow before this flow is recycled.

In a preferred embodiment the cement waste recycling device comprises a feeding unit connected to the inlet for feeding cement waste to the heater, wherein the feeding unit comprises a conveyor. Cement waste is relatively dense and a pilot cement waste recycling device is already capable of processing 3 tons of fine cement waste per hour. A conveyer enables the constant feeding of the cement waste recycling device, which is required to maintain its countercurrent operation.

In a preferred embodiment the conveyor is a screw conveyor. A screw conveyor can provide a constant flow of cement waste material and is suited to transport hard and heavy material. If desired, other conveyors can be used as well, such as a belt conveyor.

In a preferred embodiment the method may comprise moving the cement waste and the heated gas across a screen. The cement waste is dried while moving across the screen and is heated from ambient temperature up to a temperature of approximately 520°C by contact with the heated gas whose temperature is lowered from approximately 600°C to 120°C. The screen acts to slow down and disperse both the heated gas as well as the cement waste, to allow sufficient contact area and team for heat exchange.

In a preferred embodiment the method may comprise providing the screen with a plurality of layers having multiple elongate bars, wherein the elongate bars within each layer are spaced apart and arranged approximately parallel to each other. If the plurality of layers are arranged approximately perpendicular to the direction of movement of the cement waste and the heated gas, an optimal distribution of cement waste over the heater is achieved. Moreover, this allows the cement waste to be slowed down efficiently.

In a preferred embodiment the method may comprise stacking a first layer of the plurality of layers in a staggered position on top of a second layer of the plurality of layers, wherein the elongate bars within the first layer are approximately parallel to the elongate bars within the second layer. This method of stacking the layers within a screen results in a more efficient slowdown of the cement waste across the layers of the screen and enhances the homogenous distribution of cement waste throughout the screen.

In a preferred embodiment the method may comprise arranging the elongate bars spaced apart at a regular first distance from each other within at least one layer of the plurality of layers. This spacing apart can be such that a width of each spacing between the elongate bars is 5-15 mm, preferably 8-12 mm, most preferably approximately 10 mm.

In a preferred embodiment the method may additionally comprise arranging each layer such that each layer is spaced apart at a regular second distance from each other. Having even spacing of the elongate bars throughout the screen provides for an even and homogenous distribution of cement waste throughout the screen during operation of the cement waste recycling device.

In a preferred embodiment the method may comprise providing the elongate bars with an at least partly circular cross-section, such as an arc-like cross-section. Such an arc-like shape represents a good trade-off between slowing down the cement waste to promote efficient heat transfer, and preventing the screen from getting clogged. Arcs are additionally resilient and strong shapes, that are suited to withstand the impact of falling cement waste.

In a preferred embodiment the method may comprise providing the elongate bars with a radius of curvature of 10-20 mm, preferably 12.5 to 17.5 mm, and most preferably a radius of curvature of 15 mm. As such the elongate bars are curved enough so that cement waste cannot accumulate on the elongate bars.

In a preferred embodiment the method may comprise providing that at least part of the screen is vibratable. Vibrational movements further enhance the fluid flow of cement waste throughout the screen and heater.

In a preferred embodiment the method may comprise providing that at least part of the screen is vibratable at a frequency between 20-30 Hz, preferably at about 25 Hz.

In a preferred embodiment the method may comprise providing that at least part of the screen is vibratable in a vibration direction perpendicular to the direction of movement of the cement waste and the heated gas. This vibration direction makes sure that cement waste does not bounce off of the elongate bars as much as it would with another vibration direction.

In a preferred embodiment the vibration direction may be parallel to the elongate bars. In addition to being perpendicular to the cement waste transportation direction, this parallel direction further reduces the chance that cement waste bounces off of the elongate bars, and reduces wear of the elongate bars and the screen itself.

In a preferred embodiment the method may comprise providing the screen with a dampening device, preferably a bellow. This bellow, stops vibrational motion from being transmitted to stationary parts of the cement waste recycling device. Multiple dampening devices may be provided within the cement recycling device, depending on the amount of vibratable screens present.

In a preferred embodiment the method may comprise providing the screen with a length in the direction of movement of the cement waste and the heated gas of approximately 1-2 m, preferably 1.25-1.75 m, most preferably about 1.5 m. This length allows sufficient residence time to heat the cement waste up to a temperature of about 520°C, although different lengths can be chosen dependent on the configuration of the screen and its purpose (heating or cooling).

In a preferred embodiment the method may comprise cool-ing the cement waste to a temperature between 50°C and 200°C after heating the cement waste to a temperature between 400°C and 600°C. Cooling the cement waste after heating is an efficient way to reuse energy. As energy costs represent a large fraction of total costs required to recycle cement waste, regaining the energy spent on heating is very advantageous.

In a preferred embodiment the method may comprise recycling heated gas. Heated gas contains usable energy, and as such, recycling this gas results in a more energy efficient process, leading to lower operating costs. The heated gas stream can be captured at the inlet of a first heater and guided to an outlet of a second heater, wherein the first heater is stacked upon the second heater, and the outlet of the first heater is connected to the inlet of the second heater. The first heater as such effectively heats cement waste up to a temperature of about 450 - 550°C and effectively cools heated gas down to a temperature of about 50 - 200°C. While in the second heater, the cement waste is cooled down below 250°C and the recycled gas is heated to over 350°C. This very efficient arrangement of heaters leads to a cement waste recycling process that requires little energy as compared to prior art cement waste recycling processes.

In a preferred embodiment the method may comprise separating particles comprised in the heated gas with a separator, preferably a cyclone. If particles are removed from recycled gas, they cannot act as an energy sink anymore, further optimizing the overall energy efficiency of the cement waste recycling method.

In a preferred embodiment the method may comprise feed-ing the cement waste with a feeding unit before contacting the cement waste and the heated gas with each other, wherein the feeding unit comprises a conveyor. This results in a steady feed of cement waste, enabling effective heat transfer between the heated gas and the cement waste.

In a preferred embodiment the conveyor may be a screw conveyor. A screw conveyor is well equipped to transport hard and dense cement waste to an inlet of a heater at a steady flow rate, further optimizing heat transfer between the heated gas and the cement waste.

The invention will hereinafter be further elucidated with reference to the drawing of an exemplary embodiment of the device and its method of operation.

In the drawing:
Fig. 1 is a front view of a cement recycling device in accordance with a preferred embodiment of the present invention;
Fig. 2 is a side view of the cement recycling device shown in Fig. 1;
Fig. 3 is a front view of a cement recycling device having two heaters stacked above each other, a cyclone and a heated gas recycling conduit; and
Fig. 4 is a side view of the cement recycling device shown in Fig. 3.

### DETAILED DESCRIPTION OF THE FIGURES

Whenever in the figures the same reference numerals are applied, these numerals refer to the same parts. In the figures, the following reference numerals are applied that denote the parts mentioned thereafter:
- 1: cement recycling device
- 2: heater
- 3: inlet
- 4: outlet
- 5: screen
- 6: layer
- 7: elongate bar
- 8: first distance
- 9: spacing
- 10: second distance
- 11: dampening device
- 12: heated gas recycling conduit
- 13: separator

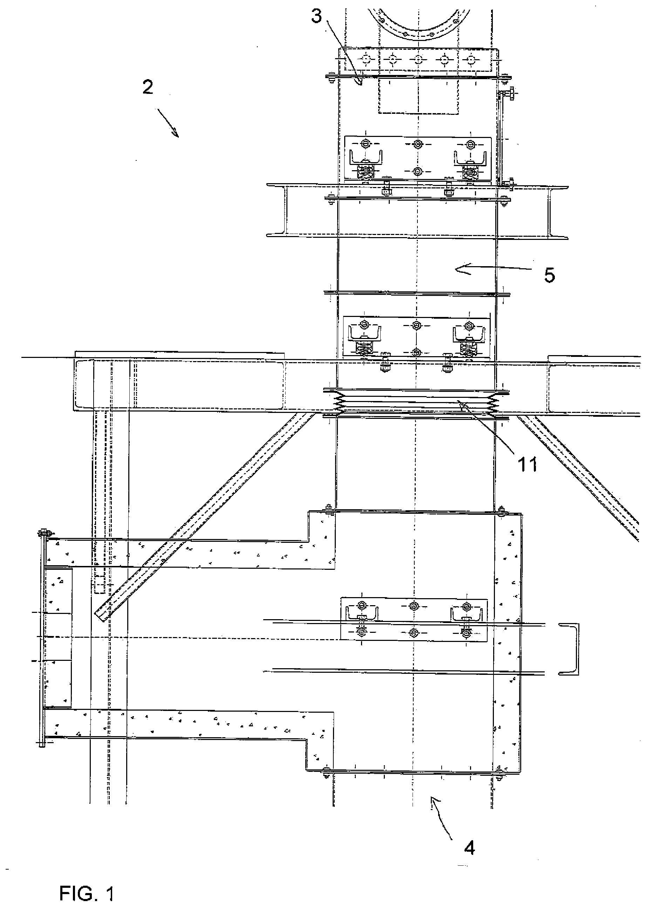

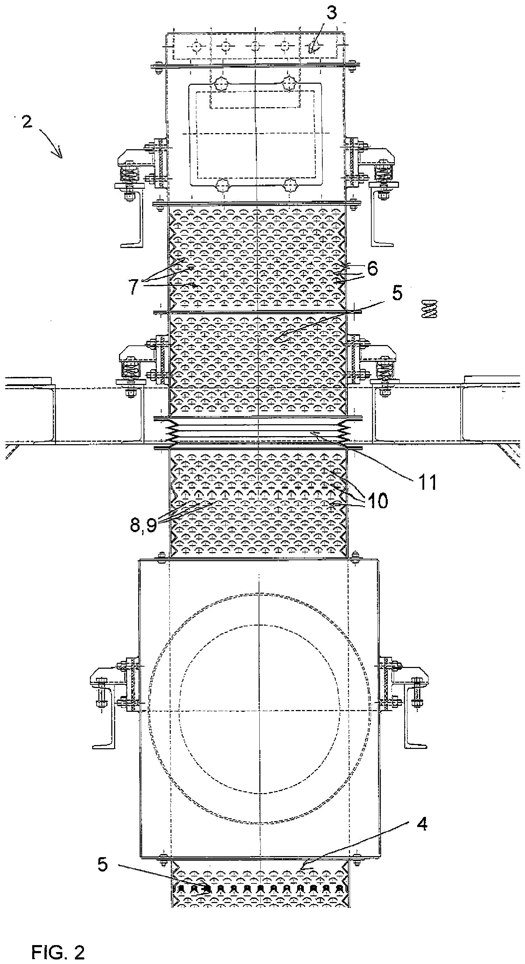

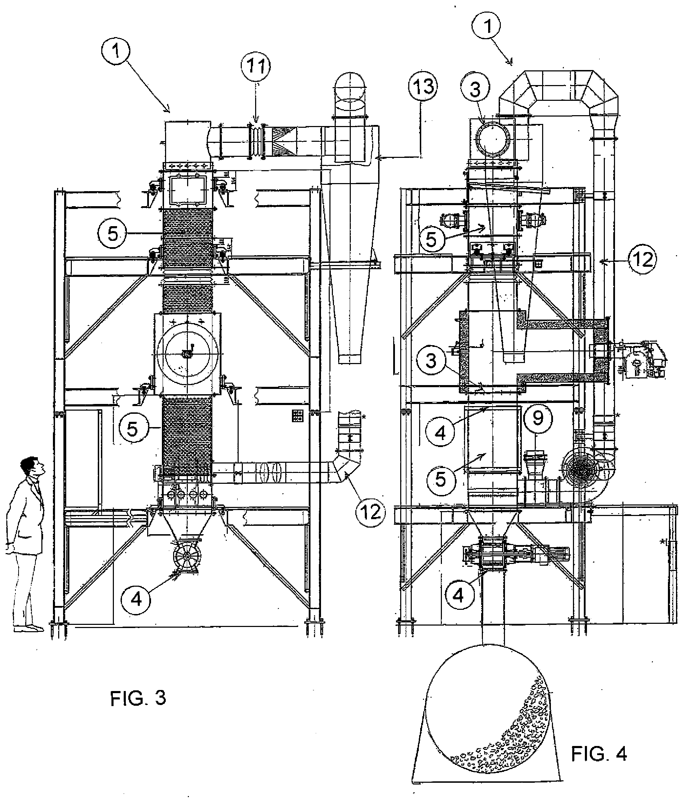

Referring to Figs. 1-4, a cement recycling device 1, in accordance with a preferred embodiment of the present invention, comprises a heater 2 with an inlet 3 for cement waste and an outlet 4 for processed cement waste, wherein the heater 2 is configured for transporting cement waste in a cement waste transportation direction from the inlet 3 to the outlet 4 while transporting heated gas in countercurrent with the cement waste transportation direction.

At least one screen 5 may be located between the inlet 3 and the outlet 4 of the heater 2. This screen 5 may comprise a plurality of layers 6 having multiple elongate bars 7, wherein the elongate bars 7 within each layer 6 are spaced apart and arranged approximately parallel to each other.

Each of the plurality of layers 6 may be arranged approximately perpendicular to the cement waste transportation direction. A first layer 6 of the plurality of layers 6 may be stacked in a staggered position on top of a second layer 6 of the plurality of layers 6, wherein the elongate bars 7 within the first layer 6 are approximately parallel to the elongate bars 7 within the second layer 6.

The elongate bars 7 may be spaced apart at a regular first distance 8 from each other within at least one layer 6 of the plurality of layers 6. A width of each spacing 9 between the elongate bars within at least one layer 6 of the plurality of layers 6 may be 5-15 mm, preferably 8-12 mm, most preferably approximately 10 mm.

Each layer 6 may be spaced apart at a regular second distance 10 from each other. The elongate bars 7 may have an at least partly circular cross-section, such as an arc-like cross-section, having a radius of curvature of 10-20 mm, preferably 12.5 to 17.5 mm, and most preferably a radius of curvature of 15 mm.

At least part of the screen 5 may be vibratable at a frequency between 20-30 Hz, preferably at about 25 Hz. The direction of this vibration may be perpendicular to the cement waste transportation direction or parallel to a longitudinal axis of the elongate bars 7.

The cement waste recycling device 1 may further comprise a dampening device 11, preferably a bellow.

The length of the screen in the cement transportation direction may be approximately 1-2 m, preferably 1.25-1.75 m, most preferably about 1.5 m.

The cement waste recycling device 1 may comprise a first heater 2 and a second heater 2, each having an inlet 3 and an outlet 4, wherein the outlet 4 of the first heater 2 is connected to the inlet 3 of the second heater 2. Heat can be recycled in the cement waste recycling device 1 which may comprise a heated gas recycling conduit 12 at one end connected near the outlet 4 of a heater 2 to the device 1 and at another end thereof connected near the inlet 3 of a heater 2 to the device 1. This heated gas recycling conduit 12 may comprise a separator 13, preferably a cyclone.

The cement waste recycling device 1 may comprise a feeding unit connected to the inlet 3 for feeding cement waste to the heater 2, wherein the feeding unit comprises a conveyor. This conveyor can be a screw conveyor.

Although the invention has been discussed in the foregoing with reference to an exemplary embodiment of the device of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. Cement waste recycling device (1), comprising:
a heater (2) with an inlet (3) for cement waste and an outlet (4) for processed cement waste,
**characterized in that**
the heater (2) is configured for transporting cement waste in a cement waste transportation direction from the inlet (3) to the outlet (4) while transporting heated gas in counter-current with the cement waste transportation direction; wherein at least one screen (5) is located between the inlet (3) and the outlet (4) of the heater (2) and wherein at least part of the screen (5) is vibratable.

2. Cement waste recycling device (1) according to claim 1, **characterized in that** the screen (5) comprises a plurality of layers (6) having multiple elongate bars (7), wherein the elongate bars (7) within each layer (6) are spaced apart and arranged parallel to each other, wherein preferably each of the plurality of layers (6) is arranged perpendicular to the cement waste transportation direction.

3. Cement waste recycling device (1) according to claim 2, **characterized in that** a first layer (6) of the plurality of layers (6) is stacked in a staggered position on top of a second layer (6) of the plurality of layers (6), wherein the elongate bars (7) within the first layer (6) are parallel to the elongate bars (7) within the second layer (6) .

4. Cement waste recycling device (1) according to any one of claims 2-3, **characterized in that** the elongate bars (7) are spaced apart at a regular first distance (8) from each other within at least one layer (6) of the plurality of layers (6), wherein preferably a width of each spacing (9) between the elongate bars (7) within at least one layer (6) of the plurality of layers (6) is 5-15 mm, more preferably 8-12 mm, most preferably approximately 10 mm.

5. Cement waste recycling device (1) according to any one of claims 2-4, **characterized in that** each layer (6) is spaced apart at a regular second distance (10) from each other.

6. Cement waste recycling device (1) according to any one of claims 2-5, **characterized in that** the elongate bars (7) have an at least partly circular cross-section, such as an arc-like cross-section.

7. Cement waste recycling device (1) according to any one of claims 2-6, **characterized in that** the elongate bars (7) have a radius of curvature of 10-20 mm, preferably 12.5 to 17.5 mm, and most preferably a radius of curvature of 15 mm.

8. Cement waste recycling device (1) according to any one of claims 1 - 7, **characterized in that** at least part of the screen (5) is vibratable at a frequency between 20-30 Hz, preferably at about 25 Hz.

9. Cement waste recycling device (1) according to claim 8, **characterized in that** at least part of the screen (5) is vibratable in a vibration direction perpendicular to the cement waste transportation direction, and preferably the vibration direction is parallel to a longitudinal axis of the elongate bars (7).

10. Cement waste recycling device (1) according to any one of claims 7-9, **characterized in that** the cement waste recycling device (1) comprises a dampening device (11), preferably a bellow.

11. Cement waste recycling device (1) according to any one of claims 1-10, **characterized in that** the length of the screen (5) in the cement transportation direction is approximately 1-2 m, preferably 1.25-1.75 m, most preferably about 1.5 m.

12. Cement waste recycling device (1) according to any one of the preceding claims, **characterized in that** the cement waste recycling device (1) comprises a first heater (2) and a second heater (2), each having an inlet (3) and an outlet (4), wherein the outlet (4) of the first heater (2) is connected to the inlet (3) of the second heater (2).

13. Cement waste recycling device (1) according to any one of the preceding claims, **characterized in that** the cement waste recycling device (1) comprises a heated gas recycling conduit (12) at one end connected near the outlet (4) of a heater (2) to the device (1) and at another end thereof connected near the inlet (3) of a heater (2) to the device (1).

14. Cement waste recycling device (1) according to claim 13, **characterized in that** the heated gas recycling conduit (12) comprises a separator (13), preferably a cyclone.

15. Cement waste recycling device (1) according to any one of the preceding claims, **characterized in that** the cement waste recycling device (1) comprises a feeding unit connected to the inlet (3) for feeding cement waste to the heater (2), wherein the feeding unit comprises a conveyor.

## Patentansprüche

1. Vorrichtung zum Recycling von Zementabfällen (1), umfassend einen Heizapparat (2) mit einem Einlass (3) für Zementabfall und einem Auslass (4) für verarbeiteten Zementabfall, **dadurch gekennzeichnet, dass** der Heizapparat (2) so konfiguriert ist, dass er Zementabfall in einer Zementabfalltransportrichtung von dem Einlass (3) zu dem Auslass (4) transportiert, während er erhitztes Gas im Gegenstrom zu der Zementabfalltransportrichtung transportiert; wobei mindestens ein Sieb (5) zwischen dem Einlass (3) und dem Auslass (4) des Heizapparates (2) angeordnet ist und wobei zumindest ein Teil des Siebes (5) vibrationsfähig ist.

2. Vorrichtung zum Recycling von Zementabfällen (1) nach Anspruch 1, **dadurch gekennzeichnet, dass** das Sieb (5) eine Vielzahl von Schichten (6) mit mehreren länglichen Stäben aufweist, wobei die länglichen Stäbe (7) innerhalb jeder Schicht (6) voneinander beabstandet und parallel zueinander angeordnet sind, wobei vorzugsweise jede der mehreren Schichten (6) senkrecht zur Transportrichtung des Zementabfalls angeordnet ist.

3. Vorrichtung zum Recycling von Zementabfällen (1) nach Anspruch 2, **dadurch gekennzeichnet, dass** eine erste Schicht (6) der Vielzahl von Schichten (6) in einer versetzten Position auf eine zweite Schicht (6) der Vielzahl von Schichten (6) gestapelt ist, wobei die länglichen Stäbe (7) innerhalb der ersten Schicht (6) parallel zu den länglichen Stäben (7) innerhalb der zweiten Schicht (6) sind.

4. Vorrichtung zum Recycling von Zementabfällen (1) nach einem der Ansprüche 2 bis 3, **dadurch gekennzeichnet, dass** die länglichen Stäbe (7) in einem regelmäßigen ersten Abstand (8) voneinander innerhalb mindestens einer Schicht (6) der Vielzahl von Schichten (6) beabstandet sind, wobei vorzugsweise eine Breite jedes Abstandes (9) zwischen den länglichen Stäben (7) innerhalb mindestens einer Schicht (6) der Vielzahl von Schichten (6) 5-15 mm, bevorzugt 8-12 mm, besonders bevorzugt ungefähr 10 mm beträgt.

5. Vorrichtung zum Recycling von Zementabfällen (1) nach einem der Ansprüche 2 bis 4, **dadurch gekennzeichnet, dass** jede Schicht (6) in einem regelmäßigen zweiten Abstand (10) voneinander beabstandet ist.

6. Vorrichtung zum Recycling von Zementabfällen (1) nach einem der Ansprüche 2 bis 5, **dadurch gekennzeichnet, dass** die länglichen Stäbe (7) einen zumindest teilweise kreisförmigen Querschnitt aufweisen, wie beispielsweise einen bogenförmigen Querschnitt.

7. Vorrichtung zum Recycling von Zementabfällen (1) nach einem der Ansprüche 2 bis 6, **dadurch gekennzeichnet, dass** die länglichen Stäbe (7) einen Krümmungsradius von 10-20 mm, bevorzugt 12.5 bis 17.5 mm, und besonders bevorzugt einen Krümmungsradius von 15 mm aufweisen.

8. Vorrichtung zum Recycling von Zementabfällen (1) nach einem der Ansprüche 1 bis 7, **dadurch gekennzeichnet, dass** zumindest ein Teil des Siebes (5) mit einer Frequenz von 20-30 Hz, bevorzugt ungefähr 25 Hz, vibrationsfähig ist.

9. Vorrichtung zum Recycling von Zementabfällen (1) nach Anspruch 8, **dadurch gekennzeichnet, dass** zumindest ein Teil des Siebes (5) in eine Vibrationsrichtung senkrecht zur Transportrichtung des Zementabfalls vibrationsfähig ist, und dass die Vibrationsrichtung bevorzugt parallel zur longitudinalen Achse der länglichen Stäbe (7) ist.

10. Vorrichtung zum Recycling von Zementabfällen (1) nach einem der Ansprüche 7 bis 9, **dadurch gekennzeichnet, dass** die Vorrichtung zum Recycling von Zementabfällen (1) eine Dämpfungsvorrichtung (11), bevorzugt ein Balg umfasst.

11. Vorrichtung zum Recycling von Zementabfällen (1) nach einem der Ansprüche 1 bis 10, **dadurch gekennzeichnet, dass** die Länge des Siebes (5) in der Transportrichtung des Zementabfalls ungefähr 1-2 m, bevorzugt 1.25-1.75 m, besonders bevorzugt ungefähr 1.5 m ist.

12. Vorrichtung zum Recycling von Zementabfällen (1) nach einem der vorangegangenen Ansprüche, **dadurch gekennzeichnet, dass** die Vorrichtung zum Recycling von Zementabfällen (1) einen ersten Heizapparat (2) und einen zweiten Heizapparat (2) umfasst, die jeweils einen Einlass (3) und einen Auslass (4) aufweisen, wobei der Auslass (4) des ersten Heizapparats (2) mit dem Einlass (3) des zweiten Heizapparats (2) verbunden ist.

13. Vorrichtung zum Recycling von Zementabfällen (1) nach einem der vorangegangenen Ansprüche, **dadurch gekennzeichnet, dass** die Vorrichtung zum Recycling von Zementabfällen (1) eine Heizgasrecyclingleitung (12) umfasst, die an einem Ende in der Nähe des Auslasses (4) eines Heizapparats (2) mit der Vorrichtung (1) verbunden ist und an ihrem anderen Ende in der Nähe des Einlasses (3) eines Heizapparats (2) mit der Vorrichtung (1) verbunden ist.

14. Vorrichtung zum Recycling von Zementabfällen (1) nach Anspruch 13, **dadurch gekennzeichnet, dass** die Heizgasrecyclingleitung (12) einen Abscheider (13), bevorzugt einen Zyklon umfasst.

15. Vorrichtung zum Recycling von Zementabfällen (1) nach einem der vorangegangenen Ansprüche, **dadurch gekennzeichnet, dass** die Vorrichtung zum Recycling von Zementabfällen (1) eine Zuführeinheit die mit dem Einlass (3) verbunden ist umfasst, um Zementabfälle in den Heizapparat (2) zu befördern, wobei die Zuführeinheit ein Förderband umfasst.

## Revendications

1. Dispositif de recyclage de déchets de ciment (1), comprenant :
un dispositif de chauffage (2) ayant une entrée (3) pour des déchets de ciment et une sortie (4) pour des déchets de ciment traités,
**caractérisé en ce que**
le dispositif de chauffage (2) est configuré pour transporter des déchets de ciment dans une direction de transport de déchets de ciment de l'entrée (3) à la sortie (4) tout en transportant un gaz chauffé à contre-courant par rapport à la direction de transport de déchets de ciment ; dans lequel au moins un tamis (5) est situé entre l'entrée (3) et la sortie (4) du dispositif de chauffage (2) et dans lequel au moins une partie du tamis (5) est apte à vibrer.

2. Dispositif de recyclage de déchets de ciment (1) selon la revendication 1, **caractérisé en ce que** le tamis (5) comprend une pluralité de couches (6) ayant de multiples barres allongées (7), dans lequel les barres allongées (7) au sein de chaque couche (6) sont espacées et agencées parallèlement les unes aux autres, dans lequel de préférence chacune de la pluralité de couches (6) est agencée perpendiculairement à la direction de transport de déchets de ciment.

3. Dispositif de recyclage de déchets de ciment (1) selon la revendication 2, **caractérisé en ce qu'**une première couche (6) de la pluralité de couches (6) est empilée dans une position décalée sur le dessus d'une seconde couche (6) de la pluralité de couches (6), dans lequel les barres allongées (7) au sein de la première couche (6) sont parallèles aux barres allongées (7) au sein de la seconde couche (6).

4. Dispositif de recyclage de déchets de ciment (1) selon l'une quelconque des revendications 2 à 3, **caractérisé en ce que** les barres allongées (7) sont espacées selon une première distance régulière (8) les unes des autres au sein d'au moins une couche (6) de la pluralité de couches (6), dans lequel de préférence une largeur de chaque espacement (9) entre les barres allongées (7) au sein d'au moins une couche (6) de la pluralité de couches (6) est de 5 à 15 mm, plus préférentiellement de 8 à 12 mm, de manière préférée entre toutes d'approximativement 10 mm.

5. Dispositif de recyclage de déchets de ciment (1) selon l'une quelconque des revendications 2 à 4, **caractérisé en ce que** chaque couche (6) est espacée des autres selon une seconde distance régulière (10).

6. Dispositif de recyclage de déchets de ciment (1) selon l'une quelconque des revendications 2 à 5, **caractérisé en ce que** les barres allongées (7) possèdent une section transversale au moins partiellement circulaire, telle qu'une section transversale de forme arquée.

7. Dispositif de recyclage de déchets de ciment (1) selon l'une quelconque des revendications 2 à 6, **caractérisé en ce que** les barres allongées (7) possèdent un rayon de courbure de 10 à 20 mm, de préférence de 12,5 à 17,5 mm, et de manière préférée entre toutes un rayon de courbure de 15 mm.

8. Dispositif de recyclage de déchets de ciment (1) selon l'une quelconque des revendications 1 à 7, **caractérisé en ce qu'**au moins une partie du tamis (5) est apte à vibrer à une fréquence entre 20 et 30 Hz, de préférence à environ 25 Hz.

9. Dispositif de recyclage de déchets de ciment (1) selon la revendication 8, **caractérisé en ce qu'**au moins une partie du tamis (5) est apte à vibrer dans une direction de vibration perpendiculaire à la direction de transport de déchets de ciment, et de préférence la direction de vibration est parallèle à un axe longitudinal des barres allongées (7).

10. Dispositif de recyclage de déchets de ciment (1) selon l'une quelconque des revendications 7 à 9, le dispositif de recyclage de déchets de ciment (1) étant **caractérisé en ce qu'**il comprend un dispositif d'amortissement (11), de préférence un soufflet.

11. Dispositif de recyclage de déchets de ciment (1) selon l'une quelconque des revendications 1 à 10, **caractérisé en ce que** la longueur du tamis (5) dans la direction de transport de ciment est approximativement de 1 à 2 m, de préférence de 1,25 à 1,75 m, de manière préférée entre toutes d'environ 1,5 m.

12. Dispositif de recyclage de déchets de ciment (1) selon l'une quelconque des revendications précédentes, le dispositif de recyclage de déchets de ciment (1) étant **caractérisé en ce qu'**il comprend un premier dispositif de chauffage (2) et un second dispositif de chauffage (2), ayant chacun une entrée (3) et une sortie (4), dans lequel la sortie (4) du premier dispositif de chauffage (2) est reliée à l'entrée (3) du second dispositif de chauffage (2) .

13. Dispositif de recyclage de déchets de ciment (1) selon l'une quelconque des revendications précédentes, le dispositif de recyclage de déchets de ciment (1) étant **caractérisé en ce qu'**il comprend un conduit de recyclage de gaz chauffé (12) relié à une extrémité près de la sortie (4) d'un dispositif de chauffage (2) au dispositif (1) et relié à une autre extrémité de celui-ci près de l'entrée (3) d'un dispositif de chauffage (2) au dispositif (1).

14. Dispositif de recyclage de déchets de ciment (1) selon la revendication 13, **caractérisé en ce que** le conduit de recyclage de gaz chauffé (12) comprend un séparateur (13), de préférence un cyclone.

15. Dispositif de recyclage de déchets de ciment (1) selon l'une quelconque des revendications précédentes, le dispositif de recyclage de déchets de ciment (1) étant **caractérisé en ce qu'**il comprend une unité d'alimentation reliée à l'entrée (3) pour alimenter en déchets de ciment le dispositif de chauffage (2), dans lequel l'unité d'alimentation comprend un convoyeur.
